(19) Europäisches Patentamt / European Patent Office / Office européen des brevets

(11) **EP 4 425 629 A1**

(12) **EUROPEAN PATENT APPLICATION**
published in accordance with Art. 153(4) EPC

(43) Date of publication:
**04.09.2024 Bulletin 2024/36**

(21) Application number: **22887170.3**

(22) Date of filing: **28.10.2022**

(51) International Patent Classification (IPC):
**H01M 10/052** (2010.01)   **H01M 4/13** (2010.01)
**H01M 10/0587** (2010.01)

(52) Cooperative Patent Classification (CPC):
**H01M 4/13; H01M 10/052; H01M 10/0587;**
Y02E 60/10; Y02P 70/50

(86) International application number:
**PCT/JP2022/040362**

(87) International publication number:
**WO 2023/074845 (04.05.2023 Gazette 2023/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **29.10.2021 JP 2021178021**

(71) Applicant: **Panasonic Intellectual Property Management Co., Ltd.**
**Kadoma-shi, Osaka 571-0057 (JP)**

(72) Inventors:
• **UCHIYAMA Yohei**
  **Kadoma-shi, Osaka 571-0057 (JP)**
• **KANO Akira**
  **Kadoma-shi, Osaka 571-0057 (JP)**

(74) Representative: **Novagraaf International SA**
**Chemin de l'Echo 3**
**1213 Onex, Geneva (CH)**

(54) **LITHIUM SECONDARY BATTERY**

(57)   A lithium secondary battery including a positive electrode, a negative electrode, a separator disposed between the positive electrode and the negative electrode, and a nonaqueous electrolyte having lithium-ion conductivity. At the negative electrode, lithium metal deposits during charging, and the lithium metal dissolves during discharging. The negative electrode includes a resin film, and a lithium metal layer laminated with the resin film.

*FIG. 3*

**EP 4 425 629 A1**

**Description**

[Technical Field]

The present disclosure relates to a lithium secondary battery.

[Background Art]

As nonaqueous electrolyte secondary batteries superior in capacity to lithium-ion batteries, lithium secondary batteries (lithium-metal secondary batteries) are seen as promising. In lithium secondary batteries, lithium metal deposits at the negative electrode during charging, and the lithium metal dissolves in the nonaqueous electrolyte during discharging, to release lithium ions.

In lithium secondary batteries, however, the negative electrode undergoes significant changes in volume, due to deposition of lithium metal at the negative electrode during charging and dissolution of the lithium metal during discharging. Therefore, buckling of the electrode, breakage of the electrode, etc. tend to occur.

The anode electrode structure proposed in Patent Literature 1 includes a current collector containing copper. The anode electrode structure further includes a lithium metal film formed on the current collector. The anode electrode structure further includes a solid electrolyte interface (SEI) film stack formed on the lithium metal film. In one embodiment, at least one of the current collectors 110 and 160 includes a polyethylene terephthalate film coated with a metal material.

[Citation List]

[Patent Literature]

Patent Literature 1: Japanese Laid-Open Patent Publication No. 2021-502671

[Summary of Invention]

[Technical Problem]

As in Patent Literature 1, it is common to use copper for the current collector in lithium secondary batteries. It has been found, however, that copper becomes brittle in the state where the negative electrode potential is low. Since the embrittlement of copper accelerates the occurrence of electrode buckling, electrode rupture, etc., the cycle characteristics of lithium secondary batteries show a tendency to deteriorate easily.

[Solution to Problem]

One aspect of the present disclosure relates to a lithium secondary battery, including: a positive electrode; a negative electrode; a separator disposed between the positive electrode and the negative electrode; and a nonaqueous electrolyte having lithium-ion conductivity, wherein at the negative electrode, lithium metal deposits during charging, and the lithium metal dissolves during discharging, the negative electrode includes a resin film, and a lithium metal layer laminated with the resin film.

[Advantageous Effects of Invention]

According to the present disclosure, it is possible to suppress the deterioration in cycle characteristics of a lithium secondary battery.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic longitudinal cross-sectional view of a lithium secondary battery according to one embodiment of the present disclosure.
[FIG. 2] An enlarged cross-sectional view of a region II in FIG. 1.

[FIG. 3] An enlarged cross-sectional view of a region III in FIG. 1.

[Description of Embodiments]

Embodiments of the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B. The phrase "a numerical value A to a numerical value B" can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

The present disclosure encompasses a combination of matters recited in any two or more claims selected from plural claims in the appended claims. In other words, as long as no technical contradiction arises, matters recited in any two or more claims selected from plural claims in the appended claims can be combined.

Embodiments of the present disclosure relate to a lithium secondary battery (lithium-metal secondary battery) using lithium metal as a negative electrode active material. The lithium secondary battery includes a positive electrode, a negative electrode, a separator disposed between the positive electrode and the negative electrode, and a nonaqueous electrolyte having lithium-ion conductivity. At the negative electrode of the lithium secondary battery, lithium metal deposits during charging, and the lithium metal dissolves during discharging.

In the lithium secondary battery, for example, 70% or more of the rated capacity develops through deposition and dissolution of lithium metal. The migration of electrons at the negative electrode during charging and during discharging is mainly due to the deposition and dissolution of lithium metal at the negative electrode. Specifically, 70 to 100% (e.g., 80 to 100%, 90 to 100%) of the migration of electrons (in other words, current flow) at the negative electrode during charging and during discharging is due to the deposition and dissolution of lithium metal. That is, the negative electrode of the lithium secondary battery differs from a negative electrode at which the migration of electrons at the negative electrode during charging and during discharging is mainly due to absorption and release of lithium ions into and from the negative electrode active material (graphite etc.).

In a battery configured to allow lithium metal to deposit at the negative electrode during charging, the open circuit voltage (OCV) of the negative electrode at full charge is, for example, 70 mV or less versus lithium metal (lithium dissolution/deposition potential). Here, "at full charge" means a state in which the battery is charged until the state of charge (SOC) reaches, for example, $0.98 \times C$ or more, where C is the rated capacity of the battery. The OCV of the negative electrode at full charge can be measured by disassembling a fully charged battery in an argon atmosphere, to take out the negative electrode, and assembling a cell using lithium metal as a counter electrode. The nonaqueous electrolyte of the cell may be of the same composition as that in the disassembled battery.

In the following, each component element of the secondary battery will be described step by step.

[Negative electrode]

In the lithium secondary battery according to an embodiment of the present disclosure, the negative electrode has a resin film, and a lithium metal layer laminated with the resin film. That is, the negative electrode is a laminate of a resin film and a lithium metal layer. Hereinafter, such a negative electrode is sometimes referred to as a "negative electrode RL."

The resin film is usually an electrical insulator and has no current-collecting function, and the lithium metal layer bears a current-collecting function. On a surface (esp., at a connection point with a lead or tab for electrically connecting the negative electrode and a terminal together) of the resin film, a foundation metal layer of copper, nickel, and the like may be provided. With the foundation metal layer, the deterioration in current-collecting function can be suppressed even when the lithium metal layer is decreased or the lithium metal is converted into a lithium compound during charge-discharge cycles.

In a lithium secondary battery, during charging, due to the deposition of lithium metal at the negative electrode, the degree of expansion of the negative electrode tends to increase. Here, the "expansion of the negative electrode" means that the sum of the volumes of the negative electrode and the deposited lithium metal increases. Especially when lithium metal deposits in a dendritic form, the expansion amount further increases. Dut to this, a stress is likely to be generated in the negative electrode.

Moreover, when copper is used for the negative electrode, copper becomes brittle in the state where the negative electrode potential is low. The stress generated in the negative electrode and the embrittlement of the copper are combined to cause the negative electrode to deteriorate, accelerating the occurrence of buckling, breakage, etc. When a broken portion of copper is observed with an SEM, a great number of grain-boundary cracks are observed along the grain boundaries of the copper. It can be inferred therefore that the brittle fracture has occurred due to the grain-boundary cracks.

On the other hand, in the negative electrode RL, the resin film does not become brittle like copper. The resin film has high flexibility and can relax the stress generated in the negative electrode, and thus, is highly resistant to stress. The negative electrode RL, which is a laminate of a resin film and a lithium metal layer, is less likely to deteriorate and less likely to cause a rapture etc. The resin film is lightweight, with which the energy density of the lithium secondary battery can be easily increases. Furthermore, the resin film is hardly cut during roll-to-roll transfer and is easy to handle.

The principal surfaces of the resin film are surfaces other than the end surfaces of the resin film, and refer to two surfaces having the largest area. The lithium metal layer may be laminated on each of the two principal surfaces on both sides of the resin film. The lithium metal layer also has two principal surfaces.

(First Embodiment)

In the first embodiment, the negative electrode has, on a principal surface on at least one side of the resin film, a lithium metal layer in contact with that principal surface. Specifically, one of the principal surfaces of the lithium metal layer is in contact with the principal surface of the resin film. The entire principal surface of the lithium metal layer on the side contacting with the principal surface of the resin film may be in contact with the principal surface of the resin film. Alternatively, 90% or more of the area of the principal surface of the lithium metal layer on the side contacting with the principal surface of the resin film may be in contact with the principal surface of the resin film.

Note that in the negative electrode RL, a layer formed inevitably may be present between the resin film and the lithium metal layer. A product produced through a lithium metal-involved reaction is regarded as part of the lithium metal layer. Also, a slight presence of copper between the lithium metal layer and the resin film so as not to cause substantial influence by embrittlement is permissible.

In the negative electrode RL, the lithium metal layer may be formed by directly attaching a film of lithium metal to a principal surface of the resin film. The lithium metal layer may be formed by directly depositing lithium metal on a principal surface of the resin film using a liquid phase method or a gas phase method. An example of the liquid phase method is an electrodeposition method. An example of the gas phase method is a vapor deposition method. The method for producing the negative electrode RL or the method for forming the lithium metal layer, however, is not particularly limited.

The principal surface of the resin film may be smooth or roughened, or may be subjected to plasma treatment, corona treatment, and the like. Plasma treatment refers to a treatment for modifying a principal surface of the resin film by plasma irradiation. Corona treatment refers to a treatment for modifying a principal surface of the resin film by corona discharge irradiation. When the principal surface of the resin film is smooth, "smooth" means that the maximum height roughness Rz of the principal surface is 10 $\mu$m or less. When the principal surface of the resin film is roughened, the maximum height roughness Rz of the principal surface exceeds 10 $\mu$m, and may be 20 $\mu$m or more. The maximum height roughness Rz is measured in accordance with JIS B 0601:2013.

In one aspect of the first embodiment, the negative electrode has a lithium metal layer on each of the principal surfaces on both sides of the resin film, and the positive electrode and the negative electrode are wound with a separator interposed therebetween. In this case, the lithium metal layer is in contact with each of the principal surfaces on both sides of the resin film.

(Second Embodiment)

In the second embodiment, the negative electrode has, on a principal surface on at least one side of the resin film, a foundation metal layer in contact with that principal surface. The lithium metal layer is in contact with at least one of a principal surface of the foundation metal layer and the principal surface of the resin film. Specifically, one of the principal surfaces of the lithium metal layer is in contact with at least one of the principal surfaces of the foundation metal layer and the resin film. The foundation metal layer serves to improve the current-collecting ability of the negative electrode.

The lithium metal layer may be, for example, in contact with the principal surfaces of both the foundation metal layer and the resin film. That is, the foundation metal layer may be provided so as to come in contact with only part of the principal surface of the resin film. In this case, the lithium metal layer can be in contact with the principal surfaces of both the foundation metal layer and the resin film. For example, of the principal surface of the resin film, a foundation metal layer may be selectively provided at a connection point with a lead or tab for electrically connecting the negative electrode and a terminal together. The area for providing a foundation metal layer may be, for example, 2% or more and 30% or less, and may be 10% or more and 20% or less, per one principal surface of the resin film. Such a limited region preferably includes a connection point with a lead or tab.

The foundation metal layer may be provided over, for example, 90% or more of the area of the principal surface, per one principal surface of the resin film. In this case, the lithium metal layer may be in contact with only the principal surface of the foundation metal layer.

The entire principal surface of the lithium metal layer on the side contacting with the principal surface of the resin film may be in contact with the principal surface of at least one of the foundation metal layer and the resin film. Alternatively, 90% or more of the area of the principal surface of the lithium metal layer on the side contacting with the principal surface of the resin film may be in contact with the principal surface of at least one of the foundation metal layer and the resin film.

In one aspect of the second embodiment, the negative electrode has a foundation metal layer and a lithium metal layer on each of the principal surfaces on both sides of the resin film, and the positive electrode and the negative electrode are wound with a separator interposed therebetween. In this case, the lithium metal layers disposed on the principal surfaces on both sides of the resin film may be respectively in contact with the principal surfaces of the foundation metal layer.

The thickness of the foundation metal layer may be, for example, 2 $\mu$m or less, and may be 1 $\mu$m or less. In this case, even when the foundation metal layer contains copper, copper is less influenced by embrittlement. However, in view of reliably obtaining the improvement effect of current-collecting ability, the thickness of the foundation metal layer is desirably, for example, 0.05 $\mu$m or more.

The foundation metal layer preferably contains, for example, copper, nickel, chromium, titanium, silver, gold, tin, etc., in terms of the ease of ensuring corrosion resistance, conductivity, etc., and in terms of the unlikeliness of being alloyed with lithium.

The foundation metal layer can be formed by, for example, a gas phase method, such as vapor deposition and sputtering, an electroless plating method, an electrolytic plating method, a laminating method, etc., but there is no particular limitation on the forming method.

The resin film is a film containing a resin or an organic material as a major component, and 51 mass% or more of the resin film is composed of a resin or an organic material. The resin film may contain an inorganic material like inorganic particles. The resin film may be a stretched film, may be a nonporous film (film without pores), may be a film having orderly arranged pores. The resin film may have insulating properties, may have electrical conductivity, and may be electrically non-conductive. The form and physical properties of the resin film are not particularly limited.

Examples of the resin contained in the resin film include, without limited thereto, polyester, polyamide, and polyimide. In particular, a resin having an aromatic ring or containing no fluorine atom is desirable. When the resin has an aromatic ring (e.g., a benzene ring) in its molecule, the affinity between the resin film and the lithium metal layer is enhanced, leading to an improved adhesive strength between the two. As the polyester, an aromatic polyester is preferred, and polyethylene terephthalate, polybutylene terephthalate, etc. are particularly preferred because of their inexpensive prices. As the polyimide, an aromatic polyimide is preferred, and as the polyamide, an aromatic polyamide (aramid) is preferred.

The tensile strength of the resin film is, for example, 100 MPa or more, may be 200 MPa or more, may be 250 MPa or more, and may be 300 MPa or more. The upper limit of the tensile strength of the resin film is not particularly limited, but may be, for example, 500 MPa or less, in view of ensuring sufficient flexibility to relax the stress.

The tensile strength of a resin film is determined from the following formula, using the maximum load measured when a test piece of the resin film is pulled at a constant speed in a direction perpendicular to its cross section. That is, the tensile strength is a nominal stress obtained by dividing the maximum load by the initial cross-sectional area. The tensile strength is measured by a method in accordance with JIS C 2151. The test piece is prepared from the resin film by punching it into a predetermined shape. The shape of the test piece is set the same as that of the test piece type 2 of JIS C 2151. The thickness of the test piece is set the same as the thickness of the resin film.

$$\rho = P_{max}/A_0$$

$\rho$: tensile strength (MPa)
$P_{max}$: maximum load (N)
$A_0$: initial cross-sectional area (mm$^2$)

The breaking elongation of the resin film is, for example, 50% or more, may be 80% or more, may be 100% or more, and may be 200% or more. The upper limit of the breaking elongation of the resin film is not particularly limited, but may be, for example, 400% or less, in view of ensuring sufficient mechanical strength.

The breaking elongation of the resin film is determined from the following formula, using the initial length and the length at break when a test piece of the resin film is pulled at a constant speed in a direction perpendicular to its cross section. The breaking elongation is measured by a method in accordance with JIS K7127. The shape of the test piece is set the same as that of the test piece type 2 of JIS K 7127. The thickness of the test piece is set the same as the film thickness.

Breaking elogation $\delta$(%) = 100×(length at break L-initial length $L_0$)/initial length $L_0$

$\delta$: breaking elongation (%)
L: length at break
$L_0$: initial length

The thickness of the lithium metal layer may be any thickness that can ensure sufficient current-collecting ability during discharging, and, for example, may be 1 $\mu$m or more, and may be 5 $\mu$m or more in a discharged state with a depth of discharge (DOD) of 90% or more. On the other hand, in view of increasing the energy density of the lithium secondary battery, the thickness of the lithium metal layer may be 40 $\mu$m or less or 30 $\mu$m or less in a discharged state with a depth of discharge of 90% or more. Note that a discharged state with a depth of discharge (DOD) of 90% or more is equivalent to a state of charge (SOC) of 0.1×C or less, where C is the rated capacity of the battery.

The lithium metal layer functions as a negative electrode current collector. During charging, lithium ions contained in the nonaqueous electrolyte receive electrons on the negative electrode to be lithium metal, which deposits on the surface of the negative electrode. The lithium metal deposited on the surface of the negative electrode current collector dissolves during discharging in the form of lithium ions into the nonaqueous electrolyte. The lithium ions contained in the nonaqueous electrolyte may be either derived from a lithium salt added to the nonaqueous electrolyte or supplied from the positive electrode active material during charging, or both.

The lithium metal layer is a layer formed of at least one of lithium metal and a lithium alloy. The lithium alloy preferably contains magnesium. The content of magnesium in the lithium alloy is, for example, 0.1 mass% or more, preferably 0.5 mass% or more or 1 mass% or more, and may be 3 mass% or more or 5 mass% or more. When the content of magnesium in the lithium alloy is within such a range, the effect of suppressing lithium metal from depositing in a dendritic form can be enhanced, and an SEI film with excellent film quality is likely to be formed on the surface of the lithium metal layer. As a result, the cycle characteristics can be further improved. The content of magnesium in the lithium alloy is, for example, 30 mass% or less, and may be 15 mass% or less, or 10 mass% or less. When the content of magnesium in the lithium alloy is within such a range, the proportion of the capacity obtained through deposition and dissolution of lithium metal is increased, leading to a higher capacity. Further, magnesium is likely to be dissolved in lithium to form a solid solution, and a stable lithium alloy is likely to be formed.

The lithium alloy may contain a third element other than lithium (first element) and magnesium (second element). Examples of the third element include aluminum, indium, calcium, lead, hydrogen, sodium, bismuth, copper, and zinc. The lithium alloy may contain one third element, or two or more third elements. The content of the third element in the lithium alloy is, for example, 10 mass% or less, and may be 1 mass% or less or less than 0.1 mass%.

In view of increasing the energy density of the lithium secondary battery, a thinner thickness of the resin film is more desirable, as long as the mechanical strength is ensured. The thickness of the resin film may be, for example, 5 $\mu$m or more and 80 $\mu$m or less, and may be 5 $\mu$m or more and 30 $\mu$m or less.

The thicknesses of the lithium metal layer and the resin film may be each determined by measuring the thickness at randomly selected 10 points on a cross section of the negative electrode with a scanning electron microscope (SEM), and calculating an average of the measured values.

The negative electrode may have the lithium metal layer on each of the principal surfaces on both sides of the resin film. In this case, an electrode group may be configured by winding the positive electrode and the negative electrode with a separator interposed therebetween. That is, the lithium secondary battery may include a wound electrode group. In general, in a wound electrode group, stress easily occurs during charging and discharging, tending to cause a rapture of the negative electrode. In particular, on the outer peripheral side of the wound electrode group, a high tensile tension may be applied to the negative electrode in some cases. However, since the negative electrode RL includes a resin film with a large breaking elongation, the occurrence of a rapture of the negative electrode can be significantly suppressed even when a high tensile tension is applied to the negative electrode on the outer peripheral side of the wound electrode group.

[Positive electrode]

The positive electrode includes, for example, a positive electrode current collector, and a positive electrode mixture layer supported on the positive electrode current collector. The positive electrode mixture layer can be formed by applying a positive electrode slurry of a positive electrode mixture dispersed in a dispersion medium, onto a surface of the positive electrode current collector, followed by drying. The dry applied film may be rolled as necessary. The positive electrode mixture material includes a positive electrode active material as an essential component, and can include a binder, a conductive agent, etc. as optional components. The positive electrode mixture layer may be formed on only one side of the positive electrode current collector, or may be formed on both sides.

The positive electrode active material is a material that develops capacity through absorption and release of lithium ions thereto and therefrom. Examples of the positive electrode active material include a lithium-containing transition metal oxide, a transition metal fluoride, a polyanion, a fluorinated polyanion, and a transition metal sulfide. In particular, a lithium-containing transition metal oxide is preferred because of its low manufacturing cost and high average discharge voltage.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one transition metal element, or two or more transition metal elements. The transition metal element may be Co, Ni and/or Mn. The lithium-containing transition metal oxide may contain one or more typical elements as necessary. Examples of the typical element include Mg, Al, Ca, Zn, Ga, Ge, Sn, Sb, Pb, and Bi. The typical element may be Al and the like.

The conductive material is, for example, a carbon material. Examples of the carbon material include carbon black, acetylene black, Ketjen black, carbon nanotubes, and graphite.

Examples of the binder include fluorocarbon resin, polyacrylonitrile, polyimide resin, acrylic resin, polyolefin resin, and rubbery polymer. Examples of the fluorocarbon resin include polytetrafluoroethylene and polyvinylidene fluoride.

The positive electrode current collector is in the form of foil, film, and the like. The positive electrode current collector may have a carbon material applied to its surface. The material of the positive electrode current collector may be, for example, a metal material including Al, Ti, Fe, and the like. The metal material may be Al, an Al alloy, Ti, a Ti alloy, a Fe alloy, etc. The Fe alloy may be stainless steel (SUS). The thickness of the positive electrode current collector is not particularly limited, and is, for example, 5 $\mu$m or more and 30 $\mu$m or less.

[Separator]

Usually, it is desirable that a separator is interposed between the positive electrode and the negative electrode. The separator is excellent in ion permeability and has moderate mechanical strength and electrically insulating properties. As the separator, a microporous thin film, a woven fabric, a nonwoven fabric, and the like can be used. The material of the separator is preferably a polyolefin, such as polypropylene and polyethylene, polymethylpentene, polyethylene terephthalate, polybutylene terephthalate, aramid, cellulose, and the like.

As the separator, one sheet may be interposed between the positive electrode and the negative electrode, and a plurality of sheets may be interposed therebetween. When a plurality of sheets are interposed as the separator between the positive electrode and the negative electrode, a plurality of sheets of one selected from microporous thin film, woven fabric, and nonwoven fabric may be stacked and used, or a plurality of sheets of at least two selected from microporous thin film, woven fabric, and nonwoven fabric may be stacked and used. The thickness of the separator when one sheet is interposed is not particularly limited, but is preferably 5 to 80 $\mu$m. The thickness of the separator when a plurality of sheets are interposed is also not particularly limited, but is preferably 5 to 80 $\mu$m.

[Nonaqueous electrolyte]

The nonaqueous electrolyte having lithium-ion conductivity may be a liquid electrolyte (electrolyte solution), may be a gel electrolyte, and may be a solid electrolyte. The liquid electrolyte (electrolyte solution) contains, for example, a nonaqueous solvent and a lithium salt dissolved in the nonaqueous solvent. The liquid electrolyte can be prepared by dissolving a lithium salt in a nonaqueous solvent. When the lithium salt is dissolved in the nonaqueous solvent, lithium ions and anions are produced.

The gel electrolyte contains a lithium salt and a matrix polymer, or contains a lithium salt, a nonaqueous solvent, and a matrix polymer. As the matrix polymer, for example, a polymer material to be gelled when it absorbs a nonaqueous solvent is used. Examples of the polymer material include fluorocarbon resin, acrylic resin, and polyether resin.

The solid electrolyte may be an inorganic solid electrolyte. As the inorganic solid electrolyte, for example, any known material for use in all-solid lithium-ion secondary batteries and the like (e.g., oxide-based solid electrolyte, sulfide-based solid electrolyte, halide-based solid electrolyte, etc.) are used.

As an anion of the lithium salt, any known anions for use in nonaqueous electrolyte of lithium secondary batteries can be used. Specific examples thereof include $BF_4^-$, $ClO_4^-$, $PF_6^-$, $CF_3SO_3^-$, $CF_3CO2^-$, imide anions, and an oxalate complex anion. Examples of the imide anions include $N(SO_2F)_2^-$, and $N(SO_2CF_3)_2^-$. The oxalate complex anion may contain boron and/or phosphorus. Examples of the oxalate complex anion include bisoxalateborate anion, $BF_2(C_2O_4)^-$

, $PF_4(C_2O_4)^-$, and $PF_2(C_2O_4)_2^-$. The nonaqueous electrolyte may contain one kind of lithium salt singly, or may contain two or more kinds of lithium salts.

In view of suppressing lithium metal from depositing in a dendritic form, the nonaqueous electrolyte preferably contains at least an oxalate complex anion. The oxalate complex anion interacts with lithium, making it more likely for a lithium metal to deposit uniformly in the form of fine particles. Therefore, local deposition of lithium metal is suppressed. The nonaqueous electrolyte may include an oxalate complex anion and another anion. The other anion may be $PF_6^-$ and/or imide anions.

As the nonaqueous solvent, an ester compound, an ether compound, a nitrile compound, an amide compound, and the like can be used. These compounds include a halogen-substituted derivative. The halogen-substituted derivative is exemplified by a fluoride. The nonaqueous electrolyte may contain these nonaqueous solvents singly, or in combination of two or more kinds.

The nonaqueous solvent may contain at least an ether compound as a major component. The major component means the content of the ether compound in the nonaqueous solvent being 50 mass% or more, which may be 80 mass% or more. The content of the ether compound in the nonaqueous solvent may be 95 mass% or less, and may be 100 mass% or less. With regard to the range of the content of the ether compound in the nonaqueous solvent, the above upper and lower limits can be combined in any combination.

The ether compound is excellent in stability (especially in reduction resistance), and the production of decomposition products on the negative electrode surface is suppressed. Presumably as a result, the expansion of the negative electrode can be suppressed.

As the ether compound, a cyclic ether and a chain ether are exemplified. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methylphenyl ether, benzyl ethyl ether, diphenyl ether, dibenzyl ether, 1,2-diethoxyethane, diethylene glycol dimethyl ether, 1,1,2,2-tetrafluoroethyl-2,2,2-trifluoroethyl ether, and 1,1,2,2-tetrafluoroethyl-2,2,3,3-tetrafluoropropyl ether. In particular, 1,2-dimethoxyethane, and 1,1,2,2-tetrafluoroethyl-2,2,2-trifluoroethyl ether are preferred. These may be used singly or in combination of two or more kinds.

As the ester compound, for example, a carbonic acid ester, a carboxylic acid ester, and the like are exemplified. Examples of a cyclic carbonic acid ester include ethylene carbonate, and propylene carbonate. Examples of a chain carbonic acid ester include dimethyl carbonate (DMC), ethyl methyl carbonate (EMC), and diethyl carbonate. Examples of a cyclic carboxylic acid ester include $\gamma$-butyrolactone, and $\gamma$-valerolactone. Examples of a chain carboxylic acid ester include ethyl acetate, methyl propionate, and methyl fluoropropionate. These may be used singly or in combination of two or more kinds.

The concentration of the lithium salt in the nonaqueous electrolyte (e.g., electrolyte solution) is, for example, 0.5 mol/L or more and 3.5 mol/L or less. The concentration of the anion in the nonaqueous electrolyte may be set to 0.5 mol/L or more and 3.5 mol/L or less. The concentration of the oxalate complex anion in the nonaqueous electrolyte may be set to 0.05 mol/L or more and 1 mol/L or less.

The nonaqueous electrolyte may contain an additive. The additive may form a surface film on the negative electrode. When the surface film derived from the additive is formed on the negative electrode, the dendrite formation and growth can be easily suppressed. Examples of the additive include vinylene carbonate, fluoroethylene carbonate (FEC), and vinyl ethyl carbonate (VEC).

[Lithium secondary battery]

In the following, the configuration of a lithium secondary battery according to the present disclosure will be described with reference to the drawings, using a cylindrical battery including a wound electrode group as an example. It is to be noted, however, that the present disclosure is not limited to the following configuration.

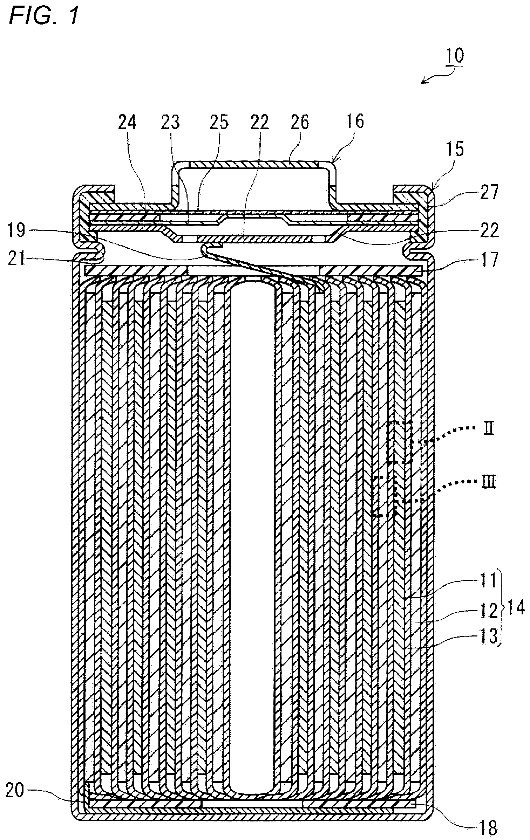

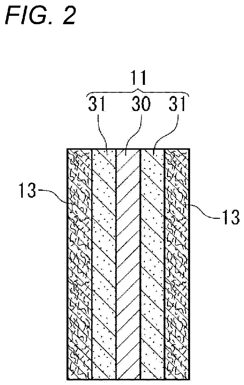

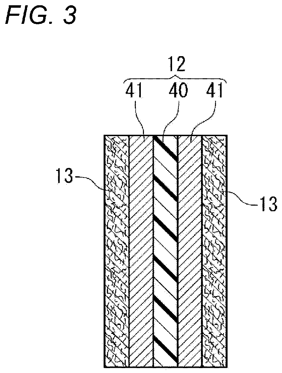

FIG. 1 is a schematic longitudinal cross-sectional view of a lithium secondary battery according to an embodiment of the present disclosure. FIG. 2 is an enlarged view of a portion (a portion including the positive electrode) surrounded by the region II in FIG. 1. FIG. 3 is an enlarged view of a portion (a portion including the negative electrode) surrounded by the region III in FIG. 1. Note that each figure is a schematic illustration, and the ratio of the dimensions (e.g., thickness) and the like of the component members may differ from the actual ones.

A lithium secondary battery 10 includes a cylindrical battery case, a wound electrode group 14 and a nonaqueous electrolyte (not shown) housed in the battery case. The electrode group 14 is constituted by winding a belt-like positive electrode 11 and a belt-like negative electrode 12, with a separator 13 interposed between the positive electrode 11 and the negative electrode 12.

The negative electrode 12 is constituted of a resin film and a lithium metal layer. The negative electrode 12 is electrically connected via a negative electrode lead 20 to a case body 15 serving as a negative electrode terminal. One end of the negative electrode lead 20 is connected, for example, to the longitudinal end of the negative electrode 12, and the other end thereof is welded to the inner bottom surface of the case body 15.

The positive electrode 11 includes a positive electrode current collector 30 and a positive electrode mixture layer 31, and is electrically connected via a positive electrode lead 19 to a cap 26 serving as a positive electrode terminal. One end of the positive electrode lead 19 is connected to, for example, near the center of the positive electrode 11 in the longitudinal direction. The positive electrode lead 19 extending from the positive electrode 11 passes through a through-hole (not shown) formed in an insulating plate 17 and extends to a filter 22. The other end of the positive electrode lead 19 is welded to the surface of the filter 22 on the side facing the electrode group 14.

The battery case includes the case body 15 which is a bottomed cylindrical container made of metal, and a sealing body 16 sealing the opening of the case body 15. A gasket 27 is disposed between the case body 15 and the sealing body 16, ensuring the airtightness of the battery case. Within the case body 15, the insulating plate 17 and an insulating plate 18 are disposed respectively at one and the other end of the electrode group 14 in the winding axis direction.

The case body 15 has, for example, a step portion 21 formed by pressing the side wall of the case body 15 partially from outside. The step portion 21 may be formed annularly on the side wall of the case body 15 along the circumferential direction of the case body 15. In this case, the sealing body 16 is supported on the step portion 21 on the side facing the opening.

The sealing body 16 includes the filter 22, a lower valve body 23, an insulating member 24, an upper valve body 25, and the cap 26. In the sealing body 16, these members are stacked in this order. The sealing body 16 is fitted at the opening of the case body 15, with the cap 26 positioned outside the case body 15 and the filter 22 positioned inside the case body 15. Each of the aforementioned members constituting the sealing body 16 has, for example, a disk shape or a ring shape. The lower valve body 23 and the upper valve body 25 are connected to each other at their respective central portions, and the insulating member 24 is interposed between their respective peripheral portions. The filter 22 and the lower valve body 23 are connected to each other at their respective peripheral portions. The upper valve body 25 and the cap 26 are connected to each other at their respective peripheral portions. In short, the members except the insulating member 24 are electrically connected to each other.

The lower valve body 23 is provided with a vent hole (not shown). Therefore, when the internal pressure of the battery case rises due to abnormal heat generation or other events, the upper valve body 25 bulges toward the cap 26 and spaced away from the lower valve body 23. This breaks the electrical connection between the lower valve body 23 and the upper valve body 25. When the internal pressure further rises, the upper valve body 25 raptures, to let the gas escape though an aperture (not shown) formed in the cap 26.

Although in the illustrated example, a cylindrical lithium secondary battery is described, the present embodiment can be applied without limited thereto. The shape of the lithium secondary battery may be selected according to its use and the like from a cylindrical shape and other various shapes, such as coin, prismatic, sheet, and flat shapes. Although the illustrated example includes a wound electrode group constituted by winding a positive electrode and a negative electrode, with a separator interposed therebetween, the electrode group also may be in any form, and may be a stacked electrode group constituted by stacking a positive electrode and a negative electrode, with a separator interposed therebetween. For other constitutions except the electrode group and the nonaqueous electrolyte of the lithium secondary battery, any known ones can be used without particular limitation.

<Examples>

The lithium secondary battery according to the present disclosure will be specifically described below with reference to Examples and Comparative Examples. The present disclosure, however, is not limited to the following Examples.

«Examples 1 to 21»

(1) Production of positive electrode

A lithium-containing transition metal oxide (NCA; positive electrode active material) containing Li, Ni, Co, and Al, acetylene black (AB; conductive material), and polyvinylidene fluoride (PVdF; binder) were mixed in a mass ratio of NCA:AB:PVdF = 95:2.5:2.5, to which N-methyl-2-pyrrolidone (NMP) was further added in an appropriate amount and stirred, to prepare a positive electrode mixture slurry. Next, the prepared positive electrode mixture slurry was applied onto both sides of an Al foil (thickness 15 $\mu$m) that functions as a positive electrode current collector, and then dried, followed by rolling of the applied films of the positive electrode mixture using a roller. Lastly, the resultant stack of the positive electrode current collector and the positive electrode mixture layers was cut in a predetermined electrode size, to obtain a positive electrode with a positive electrode mixture layer (thickness 65 $\mu$m) formed on each of both sides of the positive electrode current collector.

(2) Production of negative electrode

Resin films each having a thickness, a tensile strength, a breaking elongation, and a material as shown in Tables 1 and 2 were prepared. In an inert gas atmosphere, a lithium foil (thickness 5 $\mu$m or 30 $\mu$m) was pressure-bonded to both sides of each resin film, to produce a negative electrode including a lithium metal layer (lithium alloy foil) laminated on each of both sides of the resin film.

Only in E6, a lithium alloy foil (thickness 30 $\mu$m) containing 5 mass% of magnesium, in addition to lithium, was used.

The abbreviations in Table 1 represent as blow.

PET: polyethylene terephthalate
PBT: polybutylene terephthalate
PE: polyethylene
PP: polypropylene
PI: polyimide
PA: polyamide

In E13 and E14, a corona treatment was applied to the surfaces of the resin film. The corona discharge density was set to 10 W/cm$^2$.

In E1 to E11, a resin film with a silica filler kneaded thereinto was used. The contents of the silica filler in the resin film are shown in Table 1.

In E5 to E21, a foundation metal layer (of 0.2 $\mu$m or 1 $\mu$m thick) of copper, chromium, silver, or nickel was formed on each of both sides of the resin film by vacuum vapor deposition.

(3) Preparation of nonaqueous electrolyte

In a nonaqueous solvent, $LiPF_6$ was dissolved at a concentration of 1 mol/L, or $LiBF_2(C_2O_4)$ was dissolved at a concentration of 0.1 mol/L, to prepare a liquid of nonaqueous electrolyte. The nonaqueous solvent used here was a mixed solvent of 1,2-dimethoxyethane and 1,1,2,2-tetrafluoroethyl-2,2,2-trifluoroethyl ether.

(4) Fabrication of battery

To the positive electrode obtained above, a tab made of Al was attached. To the negative electrode obtained above, a tab made of Ni was attached. In an inert gas atmosphere, the positive electrode and the negative electrode were spirally wound, with a separator interposed between the positive electrode and the negative electrode, to form a wound electrode group. For the separator, two kinds of polyethylene microporous films (separator A having a thickness of 15 $\mu$m or separator B having a thickness of 30 $\mu$m) were used. When using two sheets in a stack (E4 to E21, R1), the separator B was placed adjacent to both surfaces of the positive electrode. The obtained electrode group was housed in a pouch-like outer body formed of a laminate sheet having an Al layer. The nonaqueous electrolyte was injected into the outer body including the electrode group housed therein, and then, the outer body was sealed. A lithium secondary battery was thus produced. In Tables 1 and 2, E1 to E21 are batteries of Examples 1 to 21.

[Evaluation]

Each of the obtained batteries was subjected to a charge-discharge cycle test in a 25 °C environment. Charging and discharging were performed under the following conditions. A rest of 20 minutes was performed between charging and discharging.

(Charging)

A constant-current charging was performed at 10 mA until the voltage reached 4.1V, and then, a constant-voltage charging was performed at 4.1 V until the current reached 1 mA.

(Discharging)

A constant-current discharging was performed at 10 mA until the voltage reached 3 V

Charging and discharging were repeated up to 100 cycles, to measure a discharge capacity at the 100th cycle. The evaluation results are shown in Tables 1 and 2. In Tables 1 and 2, the discharge capacity at the 100th cycle of each battery is shown as a relative value when the discharge capacity of the battery E1 at the 100th cycle taken as 100.

[Table 1]

| battery | resin film | | | | | | foundation metal layer | | lithium metal layer | | separator | | evaluation result |
| | material | surface treatment | tensile strength (MPa) | breaking elongation (%) | thickness μm | silica % | metal | thickness (μm) | metal | thickness (μm) | A μm | B μm | discharge capacity (relative value) |
|---|---|---|---|---|---|---|---|---|---|---|---|---|---|
| E1 | PET | - | 120 | 80 | 75 | 20 | - | - | Li | 5 | 15 | - | 100 |
| E2 | PET | - | 120 | 80 | 20 | 20 | - | - | Li | 5 | 15 | - | 100 |
| E3 | PET | - | 120 | 80 | 20 | 20 | - | - | Li | 30 | 15 | - | 102 |
| E4 | PET | - | 120 | 80 | 20 | 20 | - | - | Li | 30 | 15 | 30 | 104 |
| E5 | PET | - | 120 | 80 | 20 | 20 | Cu | 0.2 | Li | 30 | 15 | 30 | 111 |
| E6 | PET | - | 120 | 80 | 20 | 20 | Cu | 0.2 | Li-Mg | 30 | 15 | 30 | 112 |
| E7 | PET | - | 120 | 80 | 20 | 20 | Cr | 0.2 | Li | 30 | 15 | 30 | 110 |
| E8 | PET | - | 120 | 80 | 20 | 20 | Ni | 0.2 | Li | 30 | 15 | 30 | 110 |
| E9 | PET | - | 120 | 80 | 20 | 20 | Ag | 0.2 | Li | 30 | 15 | 30 | 112 |
| E10 | PET | - | 150 | 100 | 20 | 10 | Cu | 0.2 | Li | 30 | 15 | 30 | 113 |
| E11 | PET | - | 150 | 150 | 20 | 10 | Cu | 0.2 | Li | 30 | 15 | 30 | 114 |

[Table 2]

| battery | resin film | | | | | | foundation metal layer | | lithium metal layer | | separator | | evaluation result |
|---|---|---|---|---|---|---|---|---|---|---|---|---|---|
| | mate-rial | surface treatment | tensile strength | breaking elongation | thickness | silica | metal | thickness | metal | thickness | A | B | discharge capacity |
| | | | (MPa) | (%) | μm | % | | (μm) | | (μm) | μm | μm | (relative value) |
| E12 | PET | - | 180 | 150 | 20 | - | Cu | 0.2 | Li | 30 | 15 | 30 | 115 |
| E13 | PE | corona | 200 | 150 | 20 | - | Cu | 0.2 | Li | 30 | 15 | 30 | 114 |
| E14 | PP | corona | 200 | 200 | 20 | - | Cu | 0.2 | Li | 30 | 15 | 30 | 114 |
| E15 | PET | - | 200 | 200 | 20 | - | Cu | 0.2 | Li | 30 | 15 | 30 | 115 |
| E16 | PI | - | 300 | 80 | 20 | - | Cu | 0.2 | Li | 30 | 15 | 30 | 115 |
| E17 | PA | - | 200 | 200 | 20 | - | Cu | 0.2 | Li | 30 | 15 | 30 | 116 |
| E18 | PBT | - | 200 | 200 | 20 | - | Cu | 0.2 | Li | 30 | 15 | 30 | 115 |
| E19 | PBT | - | 200 | 200 | 20 | - | Cu | 1 | Li | 30 | 15 | 30 | 117 |
| E20 | PET | - | 200 | 200 | 20 | - | Cu | 0.2 | Li | 30 | 15 | 30 | 118 |
| E21 | PET | - | 200 | 200 | 20 | - | Cu | 0.2 | Li | 30 | 15 | 30 | 120 |
| R1 | Cu foil | - | 400 | 7 | 12 | - | - | - | Li | 30 | 15 | 30 | 75 |

12

<<Comparative Example 1>>

A lithium secondary battery was produced and evaluated in the same manner as in Example 4, except that an electrolytic copper foil (thickness 12 $\mu$m) was used as the negative electrode, instead of a laminate of the resin film and the lithium metal layer. The results are shown in Table 2 with the above relative values.

In the batteries E1 to E21, as compared to the battery R1, the discharge capacity at the 100the cycle was high, and the cycle characteristics were improved. Each battery after 100 cycles was disassembled, and a SEM observation was performed on the negative electrode. The result confirmed that a rupture of the copper foil had occurred in R1. On the other hand, in E1 to E21, no breakage or buckling of the negative electrode was observed.

[Industrial Applicability]

The lithium secondary battery of the present disclosure is applicable to electronic equipment, such as cellular phones, smart phones, and tablet terminals, electric cars including hybrids and plug-in hybrids, home storage battery systems combined with a solar cell, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

| | |
|---|---|
| 10 | lithium secondary battery |
| 11 | positive electrode |
| 12 | negative electrode |
| 13 | separator |
| 14 | electrode group |
| 15 | case body |
| 16 | sealing body |
| 17, 18 | insulating plate |
| 19 | positive electrode lead |
| 20 | negative electrode lead |
| 21 | step portion |
| 22 | filter |
| 23 | lower valve body |
| 24 | insulating member |
| 25 | upper valve body |
| 26 | cap |
| 27 | gasket |
| 30 | positive electrode current collector |
| 31 | positive electrode mixture layer |
| 40 | resin film |
| 41 | lithium metal layer |

**Claims**

1. A lithium secondary battery, comprising:

    a positive electrode;
    a negative electrode;
    a separator disposed between the positive electrode and the negative electrode; and
    a nonaqueous electrolyte having lithium-ion conductivity, wherein
    at the negative electrode, lithium metal deposits during charging, and the lithium metal dissolves during discharging, and

the negative electrode includes a resin film, and a lithium metal layer laminated with the resin film.

2. The lithium secondary battery according to claim 1, wherein

the negative electrode has the lithium metal layer on a principal surface on at least one side of the resin film, and the lithium metal layer is in contact with the principal surface of the resin film.

3. The lithium secondary battery according to claim 2, wherein

the negative electrode has the lithium metal layer on each of the principal surfaces on both sides of the resin film, and
the positive electrode and the negative electrode are wound, with the separator interposed between the positive electrode and the negative electrode.

4. The lithium secondary battery according to claim 1, wherein

the negative electrode has a foundation metal layer on a principal surface on at least one side of the resin film, the foundation metal layer is in contact with the principal surface of the resin film, and
the lithium metal layer is in contact with at least one of a principal surface of the foundation metal layer and the principal surface of the resin film.

5. The lithium secondary battery according to claim 4, wherein the negative electrode has the foundation metal layer and the lithium metal layer on each of the principal surfaces of on both sides of the resin film, and the positive electrode and the negative electrode are wound, with the separator interposed between the positive electrode and the negative electrode.

6. The lithium secondary battery according to claim 4 or 5, wherein a thickness of the foundation metal layer is 2 $\mu$m or less.

7. The lithium secondary battery according to any one of claims 1 to 6, wherein a tensile strength of the resin film is 100 MPa or more.

8. The lithium secondary battery according to any one of claims 1 to 7, wherein a breaking elongation of the resin film is 50% or more.

9. The lithium secondary battery according to any one of claims 1 to 8, wherein a thickness of the lithium metal layer is 40 $\mu$m or less in a discharged state with a depth of discharge of 90% or more.

10. The lithium secondary battery according to any one of claims 1 to 9, wherein a thickness of the resin film is 5 $\mu$m or more and 80 $\mu$m or less.

11. The lithium secondary battery according to any one of claims 1 to 10, wherein a resin contained in the resin film has an aromatic ring.

12. The lithium secondary battery according to any one of claims 1 to 11, wherein the lithium metal layer contains magnesium.

*FIG. 1*

FIG. 2

FIG. 3

| | | |
|---|---|---|
| **INTERNATIONAL SEARCH REPORT** | | International application No.<br>**PCT/JP2022/040362** |

**A. CLASSIFICATION OF SUBJECT MATTER**

*H01M 10/052*(2010.01)i; *H01M 4/13*(2010.01)i; *H01M 10/0587*(2010.01)i
FI:  H01M10/052; H01M4/13; H01M10/0587

According to International Patent Classification (IPC) or to both national classification and IPC

**B. FIELDS SEARCHED**

Minimum documentation searched (classification system followed by classification symbols)

H01M10/052; H01M4/13; H01M10/0587

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2016/0380314 A1 (SAMSUNG ELECTRONICS CO., LTD.) 29 December 2016 (2016-12-29)<br>paragraphs [0045]-[0046], [0054]-[0055], [0115], [0119], [0184], [0205] | 1-2, 7-12 |
| X | JP 2017-204468 A (SAMSUNG ELECTRONICS CO., LTD.) 16 November 2017 (2017-11-16)<br>paragraphs [0202], [0257]-[0258] | 1-2, 9, 11 |
| X | JP 2021-141081 A (LG CHEM, LTD.) 16 September 2021 (2021-09-16)<br>paragraphs [0011]-[0014], [0024], [0049], [0086] | 1-2, 9, 12 |
| X | JP 2005-142156 A (SAMSUNG SDI CO., LTD.) 02 June 2005 (2005-06-02)<br>paragraphs [0055]-[0056], [0137] | 1-2, 9 |
| X | JP 2021-517729 A (LG CHEM, LTD.) 26 July 2021 (2021-07-26)<br>paragraphs [0010]-[0012], [0024], [0053] | 1-2, 9 |
| X | KR 10-2018-0032000 A (LG CHEM, LTD.) 29 March 2018 (2018-03-29)<br>paragraphs [0202], [0257]-[0258] | 1-2, 10 |

☑ Further documents are listed in the continuation of Box C.   ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 December 2022** | **10 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

International application No.

**PCT/JP2022/040362**

**C.    DOCUMENTS CONSIDERED TO BE RELEVANT**

| Category* | Citation of document, with indication, where appropriate, of the relevant passages | Relevant to claim No. |
|:---:|---|:---:|
| A | KR 10-2016-0033608 A (LG CHEM, LTD.) 28 March 2016 (2016-03-28) | 1-12 |
| A | US 2018/0053978 A1 (HYUNDAI MOTOR COMPANY) 22 February 2018 (2018-02-22) | 1-12 |
| A | JP 2018-046005 A (UNITIKA LTD.) 22 March 2018 (2018-03-22) | 1-12 |

Form PCT/ISA/210 (second sheet) (January 2015)

**INTERNATIONAL SEARCH REPORT**
Information on patent family members

| International application No. |
| --- |
| **PCT/JP2022/040362** |

| Patent document cited in search report | | | Publication date (day/month/year) | Patent family member(s) | | | Publication date (day/month/year) |
| --- | --- | --- | --- | --- | --- | --- | --- |
| US | 2016/0380314 | A1 | 29 December 2016 | EP | 3109924 | A1 | |
| | | | | KR | 10-2017-0001069 | A | |
| | | | | CN | 106299244 | A | |
| JP | 2017-204468 | A | 16 November 2017 | US | 2017/0324097 | A1 | |
| | | | | paragraphs [0224], [0271]-[0272] | | | |
| | | | | EP | 3244471 | A1 | |
| | | | | KR | 10-2017-0126404 | A | |
| | | | | CN | 107359309 | A | |
| JP | 2021-141081 | A | 16 September 2021 | US | 2020/0075939 | A1 | |
| | | | | paragraphs [0011]-[0014], [0026], [0054], [0095] | | | |
| | | | | WO | 2018/199505 | A1 | |
| | | | | EP | 3547411 | A1 | |
| | | | | KR | 10-2018-0119254 | A | |
| | | | | CN | 110168782 | A | |
| JP | 2005-142156 | A | 02 June 2005 | US | 2005/0095504 | A1 | |
| | | | | paragraphs [0070]-[0071], [0078] | | | |
| | | | | KR | 10-0542213 | B1 | |
| | | | | CN | 1612377 | A | |
| JP | 2021-517729 | A | 26 July 2021 | US | 2021/0020927 | A1 | |
| | | | | paragraphs [0011]-[0013], [0025], [0054] | | | |
| | | | | WO | 2020/145753 | A1 | |
| | | | | EP | 3764436 | A1 | |
| | | | | KR | 10-2020-0087437 | A | |
| | | | | CN | 111868974 | A | |
| KR | 10-2018-0032000 | A | 29 March 2018 | (Family: none) | | | |
| KR | 10-2016-0033608 | A | 28 March 2016 | (Family: none) | | | |
| US | 2018/0053978 | A1 | 22 February 2018 | KR | 10-2018-0019822 | A | |
| | | | | CN | 107768599 | A | |
| JP | 2018-046005 | A | 22 March 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021502671 A